# DEMANDE DE BREVET EUROPEEN

(11) **EP 1 167 494 A1**
(43) Date de publication de la demande: **02.01.2002**
(21) Numéro de dépôt: 01450012.8
(22) Date de dépôt: 28.06.2001
(51) Int. Cl.: C10L 5/46

(54) **Procédé de valorisation de déchets industriels et composition à haut pouvoir calorifique obtenue**

(30) Priorité: 28.06.2000 FR 0008326; 25.06.2001 FR 0108339
(71) Demandeur: ETS Boucou, Société à Responsabilité Limitée, 64230 Lescar (FR)
(72) Inventeur: Boucou, Michel, 64230 Lescar (FR)
(74) Mandataire: Thébault, Jean-Louis

(57) **Abrégé**

L'objet de l'invention est un procédé de valorisation de déchets industriels, comprenant les étapes suivantes :
- tri (10) des déchets en sorte de retirer les matériaux métalliques,
- stockage (12) des déchets par catégorie,
- préparation (14) d'une composition (20) intermédiaire comportant un mélange de matériaux tels que du bois, du papier/carton, des matières plastiques, des fibres végétales ou synthétiques, et
- broyage (16) de cette composition (20) intermédiaire pour la rendre utilisable en tant que combustible, et caractérisé en ce que l'on ajoute à cette composition (20) intermédiaire des grains de céréales incluant les semences, pour obtenir une composition (26) finale.

Plus particulièremen t, on utilise une chaudière à lit fluidisé.

L'invention couvre aussi la composition à haut pouvoir calorifique ainsi obtenue.

## Description

La présente invention concerne un procédé de valorisation de déchets industriels. L'invention couvre aussi la composition à haut pouvoir calorifique ainsi obtenue.

Dans le cas des déchets ménagers, le recyclage avec un tri sélectif est de mise et de plus en plus pratiqué par obligation car la mise en décharge est proscrite par manque de place d'une part et par intérêt financier d'autre part.

En effet, les déchets peuvent être valorisés de plusieurs façons.

Tout d'abord, il est prévu un tri sélectif qui assure le retrait des ferrailles par des moyens magnétiques et pour les matériaux métalliques amagnétiques on utilise des détecteurs de métaux et on procède à un retrait manuel. De même, les produits en matière plastique comme les emballages du type bouteilles de liquides alimentaires sont séparés. Les matières organiques et le tout venant non retiré sont incinérés dans des fours comme ceux des cimenteries.

De tels fours rotatifs doivent être alimentés en complément avec des matières carbonées, notamment du coke, en sorte de relever le pouvoir calorifique très faible des matières organiques qui de plus contiennent un certain pourcentage d'eau.

Dès lors, le bilan financier pour le retraitement des déchets est grevé par l'achat des matières fossiles complémentaires.

Le but de la présente invention est de proposer un procédé de valorisation des déchets industriels qui permet d'obtenir une composition à haut pouvoir calorifique qui peut être utilisé seule en tant que combustible primaire. Dans ce cas, le haut pouvoir calorifique permet d'atteindre des températures élevées et autorise de nombreuses applications.

De plus, cette composition peut aussi être associée à des matières à faible pouvoir calorifique et à combustion difficile pour en permettre une combustion dans les meilleures conditions.

On sait que les chaudières présentant un fonctionnement optimisé sont les chaudières dites à lit fluidisé. De telles chaudières disposent d'un combustible dans lequel circule un flux d'air qui assure la combustion d'une part et permet aussi la mise en suspension des particules. De ce fait, il faut pouvoir disposer de particules, de taille homogène qui plus est et non de morceaux de tailles disparates et de densités très variables. En effet, la mise en lit fluidisé et le calcul comme la répartition du flux d'air seraient alors impossible.

C'est pour cette raison que les chaudières à lit fluidisé ne sont actuellement pas utilisées dans de telles conditions. Les déchets qui sont introduits ayant des dimensions trop disparates ne permettent pas un fonctionnement à haut rendement.

Il serait nécessaire de prévoir un criblage. Dès lors, cette étape provoque un surcoût dans un métier où les marges restent très faibles. De plus, que faire des refus si ce n'est assurer leur broyage, ce qui augmente encore le coût de l'élimination et cette voie devient incompatible avec le marché.

Lorsqu'il est alimenté avec des particules adaptées, comme cela est prévu dans la présente invention, le lit fluidisé permet de limiter fortement le taux de mâchefer produit lors de la combustion.

La valorisation est meilleure, la production de calories est augmentée par le bon rendement de la combustion en lit fluidisée et l'élimination des déchets finaux est réduite en quantité.

A cet effet, le procédé de valorisation de déchets industriels, comprenant les étapes suivantes :
- tri (10) des déchets en sorte de retirer les matériaux métalliques,
- stockage (12) des déchets par catégorie,
- préparation (14) d'une composition (20) intermédiaire comportant un mélange de matériaux tels que du bois, du papier/carton, des matières plastiques, des fibres végétales ou synthétiques, et
- broyage (16) de cette composition (20) intermédiaire pour la rendre utilisable en tant que combustible,
se caractérise en ce que l'on ajoute à cette composition (20) intermédiaire des grains de céréales incluant les semences, pour obtenir une composition (26) finale.

Un exemple de composition sera donné par la suite.

De préférence, il est prévu également une taille de particules comprise entre 25 et 50 mm.

Ceci permet de valoriser les déchets dans une chaudière à lit fluidisé.

On ajoute à cette composition intermédiaire des grains de céréales, dans des proportions de 5 à 15%.

L'invention couvre aussi la composition à haut pouvoir calorifique obtenue.

La présente invention est maintenant décrite en détail selon un mode de réalisation particulier, non limitatif, en regard du dessin annexé sur lequel la figure unique représente une vue d'un synoptique intégrant la succession des étapes du procédé selon la présente invention.

Selon le procédé de la présente invention, la première étape 10 consiste à trier les déchets industriels. Ces déchets industriels comprennent tous types de matières sauf de la matière organique des déchets ménagers. Ces déchets sont stockés de façon isolée pour chaque catégorie, cette étape est référencée 12.

On y trouve :
- des métaux magnétiques ou amagnétiques qui doivent être systématiquement retirés pour la mise en oeuvre du procédé selon la présente invention. Lors de ce tri principal, les cailloux et autres matières non incinérables comme la céramique ou le verre sont retirées.
- du bois, par exemple sous forme de caisses, palettes, planches qui ne peut être utilisé tel quel car les morceaux sont généralement de taille trop importante et surtout non homogène.
- des matières cellulosiques provenant des emballages papier et carton. On peut aussi trouver quelques fibres végétales ou de synthèse dans le cas de tissus, mais ces matières se trouvent en petite quantité dans le cas des déchets industriels concernés.
- des matières plastiques qui vont du tuyau ou tube de tout diamètre et en différents types de polymères. Il est à noter que les matières plastiques chlorées doivent être conservées uniquement si l'unité d'incinération ultérieure est équipée d'un système de traitement des fumées avec piégeage du chlore.

Le procédé selon la présente invention consiste à préparer, à partir de chacun des types de déchet, une composition de base, étape 14 avec les proportions en poids suivantes :
- 40 à 60% de bois,
- 10 à 30% de papier carton,
- 2 à 15% de matière plastique, et
- 2 à 15% de tissus et autres fibres organiques ou de synthèse

Une telle composition de base est introduite dans un broyeur qui assure un déchiquetage des matières, c'est l'étape 16. Un tel broyeur est avantageusement fabriqué et commercialisé par la société française Phénix Industrie.

Un tel broyeur présente un tambour avec des dents qui passent à travers une contre-grille et assurent ainsi la réduction des matières, qu'il s'agisse de tissus, de bois ou de matière plastique.

La taille des particules obtenues se situe dans une plage de 25 à 50 mm pour donner un ordre de grandeur.

Ce broyeur assure de plus un mélange et une homogénéisation des matières simultanément au broyage.

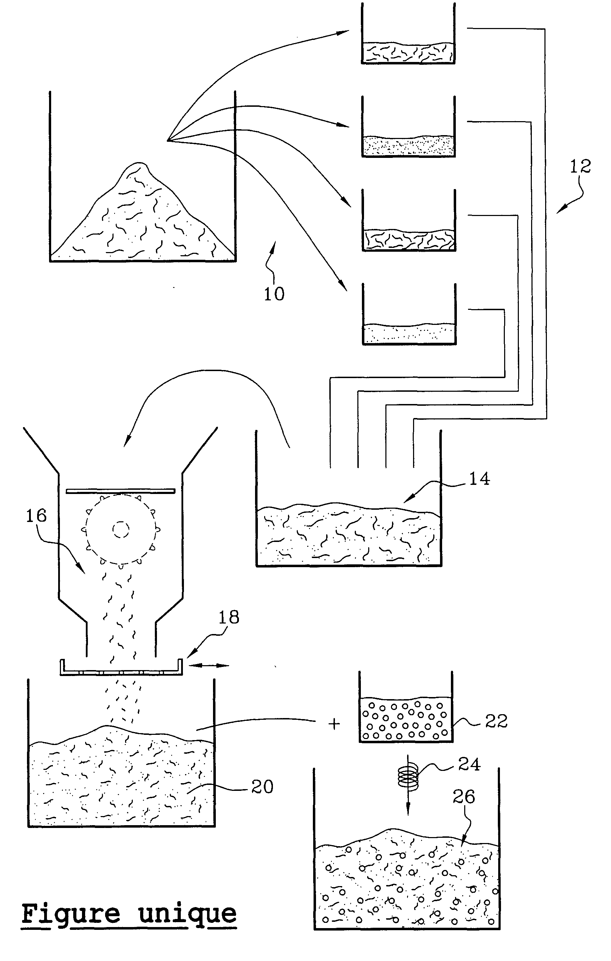

Afin de disposer d'une matière homogène et surtout afin d'optimiser la combustion en lit fluidisé ultérieure, les particules passent à travers une grille de calibrage, schématiquement montrée sur la figure 18.

La composition ainsi obtenue dite composition 20 intermédiaire présente un pouvoir calorifique intéressant et suffisant pour permettre une combustion sans aucune autre adjonction. Néanmoins, pour certaines applications, ce pouvoir calorifique est encore insuffisant, si bien que le procédé selon la présente invention prévoit d'augmenter ce pouvoir calorifique par adjonction de céréales.

En effet, on dispose de grandes quantités de grains de céréales, notamment des semences déclassées, qui ne sont utilisables ni dans l'industrie agro-alimentaire souvent pour des raisons de qualité et de présentation extérieure ou de taille, ni pour l'élevage du bétail pour des raisons purement nutritionnelles. Ces grains posent des problèmes car non seulement, ils ne sont pas valorisés mais il faut s'en débarrasser, ce qui n'est pas simple. Si l'on souhaite brûler ces grains directement, il faut absolument leur adjoindre un produit d'origine fossile, ce qui revient au problème des ordures ménagères.

Ainsi, dans les grandes régions productrices de blé, de maïs, d'orge de sorgho ou de colza, il est utile de proposer un moyen de valorisation de ces grains.

Le présent procédé propose d'adjoindre à la composition intermédiaire une quantité de 5 à 15 % de grains de céréales.

Pour donner un exemple, la composition suivante est à fort pouvoir calorifique puisque l'on atteint des valeurs de l'ordre de 5 000 kcal/kg de matière combustible:
- 40 à 60% de bois,
- 10 à 30% de papier carton,
- 2 à 15% de matière plastique,
- 2 à 15% de tissus et autres fibres organiques ou de synthèse, et
- 5 à 15% de grains de céréales comme le maïs, le blé, l'orge, le sorgho ou le colza

Cette adjonction est effectuée directement dans la composition 20 intermédiaire, par une trémie 22 complémentaire et par passage dans un mélangeur 24 qui ne brise pas les grains mais assure simplement la bonne homogénéisation du milieu.

Ces grains peuvent aussi faire l'objet d'une adjonction directement dans le broyeur car ce dernier étant du type à dents et contre-grille, il ne se produit pas d'écrasement et l'homogénéisation est obtenue simultanément.

La composition 26 finale ainsi obtenue présente un pouvoir calorifique intéressant comme combustible à part entière mais aussi comme combustible d'appoint dans les chaudières à lit fluidisé afin d'entretenir la combustion.

## Revendications

1. Procédé de valorisation de déchets industriels, comprenant les étapes suivantes :
- tri (10) des déchets en sorte de retirer les matériaux métalliques,
- stockage (12) des déchets par catégorie,
- préparation (14) d'une composition (20) intermédiaire comportant un mélange de matériaux tels que du bois, du papier/carton, des matières plastiques, des fibres végétales ou synthétiques, et
- broyage (16) de cette composition (20) intermédiaire pour la rendre utilisable en tant que combustible,
**caractérisé en ce que** l'on ajoute à cette composition (20) intermédiaire des grains de céréales incluant les semences, pour obtenir une composition (26) finale.

2. Procédé selon la revendication 1, **caractérisé en ce que** l'on assure un calibrage (18) des matières broyées.

3. Procédé selon la revendication 1 ou 2, **caractérisé en ce que** les particules de la composition intermédiaire ont une taille comprise entre 25 et 50 mm.

4. Procédé selon la revendication 3, **caractérisé en ce que** la combustion de la composition intermédiaire est réalisée dans une chaudière à lit fluidisé.

5. Procédé selon l'une quelconque des revendications 1 à 4, **caractérisé en ce que**, lorsque il est introduit un des composés suivants, le pourcentage de chacun de ces compositions est compris entre :
- 40 à 60% de bois, et/ou
- 10 à 30% de papier carton, et/ou
- 2 à 15% de matière plastique, et/ou
- 2 à 15% de tissus et autres fibres organiques ou de synthèse.

6. Procédé selon l'une quelconque des revendications précédentes, **caractérisé en ce que** les grains de céréales sont ajoutés dans des proportions de 5 à 15%.

7. Procédé selon l'une quelconque des revendications précédentes, **caractérisé en ce que** les céréales sont choisies parmi le maïs, le blé, l'orge, le sorgho.

8. Procédé selon l'une quelconque des revendications précédentes, **caractérisé en ce que** l'on ajoute les grains après broyage et que l'on fait subir à l'ensemble une action de mélange pour obtenir une composition (26) finale à haut pouvoir calorifique.

9. Composition à haut pouvoir calorifique obtenue par la mise en oeuvre de l'une quelconque des revendications 1 à 8, **caractérisée en ce que** le pouvoir calorifique est de l'ordre de 5 000 kcal/kg.
